# EUROPEAN PATENT SPECIFICATION

(11) **EP 1 927 931 B1**
(45) Date of publication and mention of the grant of the patent: **17.06.2009**
(21) Application number: 07121840.8
(22) Date of filing: 29.11.2007
(51) Int. Cl.: G06K 7/00

(54) **Fraud-preventing security arrangement for an electrical connector for chip cards**
Sicherheitsanordnung zur Betrugsvorbeugung für einen elektrischen Verbinder für Chipkarten
Agencement de sécurité contre la fraude pour connecteur électrique pour carte à puce

(30) Priority: 01.12.2006 FR 0655259
(43) Date of publication of application: 04.06.2008
(73) Proprietor: CoActive Technologies, Inc., Greenwich CT 06830 (US)
(72) Inventor: Daubigney, Patrick, 39100 Authume (FR); Gie, Rodolphe, 25000 Besançon (FR); Pinon, Guillaume, 70140 Pesmes (FR); Duprat, Damien, 39100 Dole (FR)
(74) Representative: Kohn, Philippe

(56) References cited:
- DE-A1- 4 312 905
- DE-U1-3202006 009 98

## Description

### TECHNICAL FIELD OF THE INVENTION

The present invention relates to a fraud-preventing security arrangement for an electrical connector for chip cards.

The invention relates to a security arrangement for an electrical connector for connecting an electrical memory card with contacts, the connector comprising a horizontal bottom plate made of insulating material which bears a series of blades for contacting the lands of the memory card, each contact blade being elastically deformable and arranged parallel to a longitudinal horizontal direction and comprising:
- a top portion for connecting with a contact land of the memory card, which projects above the top face of the horizontal bottom plate of the connector;
- and a bottom portion for connecting with a conductive track on one side of a bottom printed circuit board which bears the connector;
the arrangement comprising a protection element which bears at least one protection conductor circuit which at least partly surrounds the bottom plate of the connector and which is connected to at least one of the tracks on one side of the printed circuit board to be linked to a detection circuit.

### STATE OF THE ART

Among the various contact blades arranged in parallel to each other, in one or more groups of several blades - for example in two groups of four blades aligned longitudinally in pairs - the connector comprises at least one first so-called signal contact blade.

Among the so-called signal contact blades, there is, for example, the so-called input/output contact blade or I/O blade, which is, for example, in contact with a corresponding land of the chip card and which can produce an I/O signal when the chip card is in position.

Among the various contact blades, the connector also includes at least one second so-called ground contact blade which is intended to be in contact with a corresponding land of the card and which is connected to a ground circuit of the read/write device equipped with the connector.

The various fraud attempts on read/write devices equipped with such a connector notably include a step aiming to reach said I/O contact blade.

Such a manoeuvre is decisive in enabling chip card fraud.

To this end, a fraudster can, for example, drill a hole in the insulating block bearing the contact blades and/or in the printed circuit board which, on its top face, is equipped with the connector.

The use of arrangements with which to enhance the overall security of the read/write devices by providing means making it possible to detect and prevent the fraud attempts is known.

Document FR-A-2.875.036 describes an electrical connector comprising a metal plate forming a protective cage which extends facing a portion opposite the I/O contact blade, and which is electrically linked to a ground blade of the connector.

Thus, any attempt to reach the I/O contact blade by means of a metal object, and for example by means of a metal drill, results in setting up an electrical link between the protective plate which is linked to ground and the first contact blade.

A short circuit is then produced by grounding the first contact blade, which constitutes a signal representing a fraud attempt.

However, such an arrangement does not effectively protect against fraud attempts by intrusion via the top and/or side faces of the duly protected connector. It also has the drawback of not being concealed and it thus possibly becomes easier for a fraudster to circumvent such an arrangement.

Fraud detection occurs only "through" the blades of the connector, which can provoke a deterioration of the signal processing circuits to which the connector is linked.

Furthermore, connecting the plate to the ground blade results in complex structures and arrangements.

The invention seeks to propose a significantly more discreet arrangement, protecting a greater area of the contact blades, in particular an area vertical to the contact blades and making it possible to detect a fraud before there is a contact between the drilling device and the targeted contact blade.

DE-U-20 2006 009 983 discloses a connector for a chip card that is surrounded on all sides by a protective case comprising at least one conductor.

### SUMMARY OF THE INVENTION

To this end, the invention proposes a security arrangement
characterized in that the horizontal bottom plate of the connector bears at least one additional contact blade which comprises:
- a top portion for connecting with the protection circuit of the protection element;
- and a bottom portion for connecting with said at least one track linking to the detection circuit.

According to other characteristics of the invention:
- the bottom connecting portion of the additional contact blade is of the same type as those of the blades for contact with the card;
- said bottom connecting portions are coplanar horizontal, each to be soldered and/or brazed to an associated track on the face of the printed circuit board;
- the protection element comprises a tab which bears at least one end of the protection circuit and which extends through a slot in the bottom plate of the connector and the top connecting portion of the additional contact blade is elastically deformable and projects into the slot so as to be electrically connected with said at least one end of the protection circuit when the tab is inserted into the slot;
- the top connecting portion of the additional contact blade is oriented downwards and said at least one end of the protection circuit is borne by the top face of the tab;
- the contact blades for the lands of the memory card are borne by a blade-bearing block made of insulating material which is added into the bottom plate of the connector and the additional contact blade is borne by a cover which is added onto the bottom plate of the connector;
- the protection element is a cover added above the connector and the protection circuit is arranged inside the cover;
- the cover comprises at least one fixing tab which extends under the bottom plate of the connector and above the top face of the printed circuit board, and which comprises a hole which is passed through by a post for fixing the bottom plate of the connector, the hole of the fixing tab being surrounded by at least one track of the protection circuit;
- the protection element is produced in the form of a flexible or semi-rigid sheet;
- the protection element bears a protecting film of insulating material on which snakes at least one track of the protection circuit, and the electrical continuity of the tracks of the protection circuit borne by the film and those borne by the protection element is provided by means of at least one electrically conductive bridge;
- the conductive bridge is electrically cut when the protection element and the film are vertically separated from each other;
- the protection element comprises several separate protection circuits which are each arranged snake-wise to form a protection circuit.

### BRIEF DESCRIPTION OF THE FIGURES

Other characteristics and advantages of the invention will become apparent from reading the following detailed description, for an understanding of which reference should be made to the appended drawings in which:
- figure 1 is a top perspective view, which illustrates an arrangement according to a first embodiment of the invention, comprising a connector for chip card topped by a protective cover;
- figure 2 is a bottom perspective view, illustrating the fixing and electrical connection of the protective cover to contact blades borne by the bottom plate of the connector of figure 1 ;
- figure 3 is a bottom perspective view which illustrates the protective cover of figure 1 ;
- figure 4 is a diagrammatic cross-sectional view which illustrates the arrangement of the tracks of the protection circuits on the vertical walls of the cover of figure 1 ;
- figure 5 is a perspective exploded view which illustrates the protective cover of figure 1 and an added-on protective film;
- figure 6 is an exploded perspective diagrammatic view which illustrates the conductive bridges for connecting electrical tracks of the cover of figure 1 to electrical tracks of the protection film;
- figure 7 is an electrical circuit diagram which illustrates the routing of the electrical tracks of two protection circuits which extend on the cover and the protection film;
- figure 8 is a bottom perspective view which illustrates a block bearing contact blades of the bottom plate of the connector of figure 1;
- figure 9 is a top perspective view which illustrates a front cover and a rear cover for the contact blades of the connector of figure 1;
- figure 10 is a top perspective view which illustrates the contact blades and the additional contact blades of the connector of figure 1;
- figure 11 is a bottom perspective view which illustrates the rear cover of figure 9 bearing the additional contact blades of the connector of figure 1 ;
- figure 12 is a bottom perspective view which illustrates a second embodiment of the arrangement according to the invention;
- figure 13 is a bottom perspective view which illustrates the cover and the arrangement of the contact blades and of the additional contact blades of the connector of figure 12.

### DETAILED DESCRIPTION OF THE FIGURES

In the description that follows, identical, similar or analogous components are designated by the same reference numbers.

As a non-limiting example, to assist in understanding the description and the claims, the terms vertical, horizontal, bottom, top, up, down, transversal, longitudinal, and so on will be adopted with reference to the L, V, T trihedron indicated in the figures.

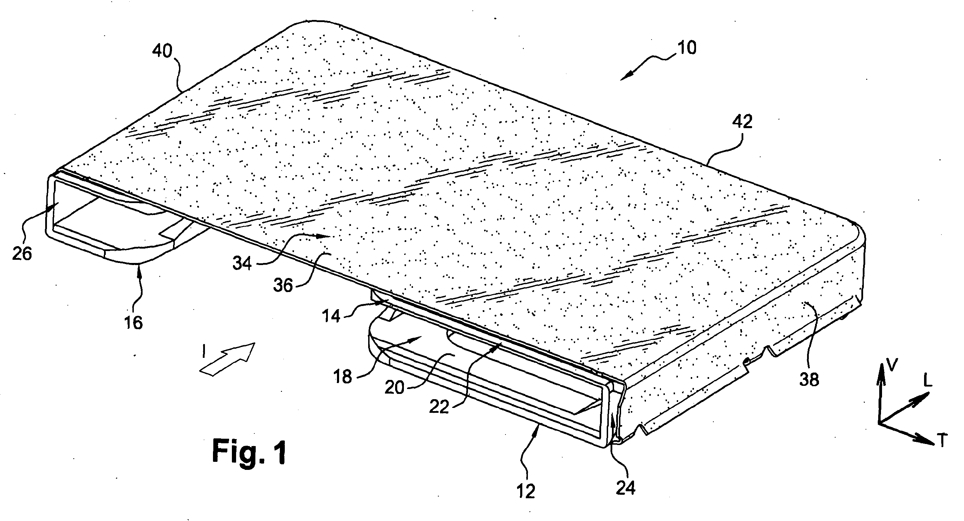

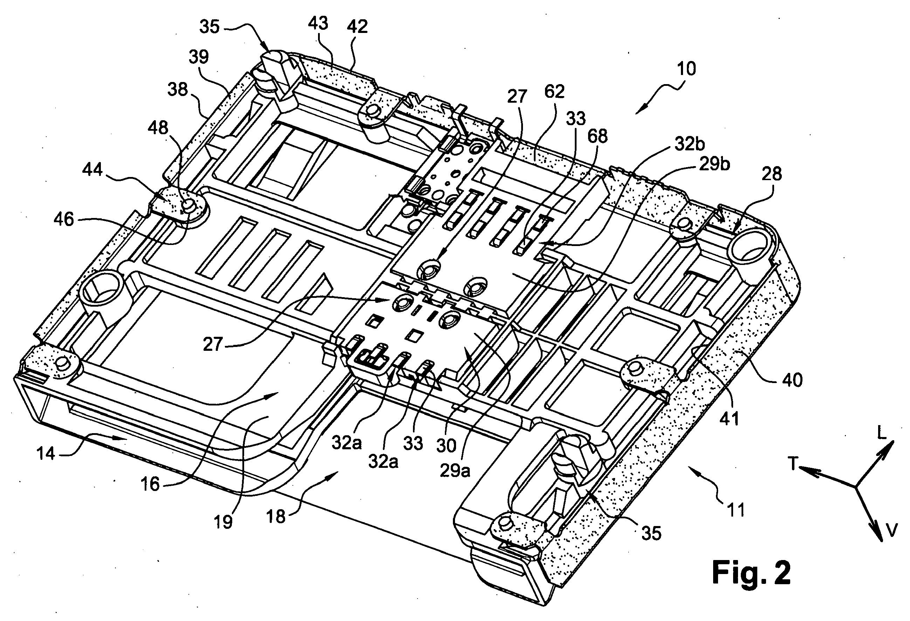

Figures 1 and 2 represent a connector 10 which mainly comprises a body 12, or housing, which is implemented, for example, in insulating plastic material produced by moulding.

The general design of the connector 10 with its insulating body 12 is in this case of the type of that described and represented in document US-A-5.775.949.

The body 12 mainly comprises a top cover 14, in this case horizontal overall, and a bottom horizontal plate 16 which, once fitted together, delimit between them a longitudinal slot 18 for inserting, from front to rear in the direction indicated by the arrow "I" in figure 1, a chip card (not represented).

As a nonlimiting example, the cover 14 can be made of material by moulding with the bottom horizontal plate 16, so that the body 12 forms only a single part.

The bottom plate 16 of the connector 10 also makes it possible to fit and fix the connector 10 on a printed circuit board PCB of a read/write device (not represented), here using two vertical posts 35, represented in figure 2.

The chip card here comprises, in its bottom face oriented facing a top face 20 of the bottom horizontal plate 16 of the connector 10, conductive lands arranged in a standardized way.

As can be seen notably in figures 1 and 2, the cover 14 comprises a top horizontal plate 22, two vertical lateral side plates 24 and 26 which extend in the longitudinal direction "L" and a bottom vertical lateral plate 28 which extends in the transverse direction "T".

The two lateral plates 24 and 26 are opposite to each other and provide lateral guidance of the chip card in the longitudinal direction "L", limiting its transverse displacement. The bottom plate 28 is perpendicular to the lateral plates 24 and 26 and delimits the bottom of the card insertion slot 18.

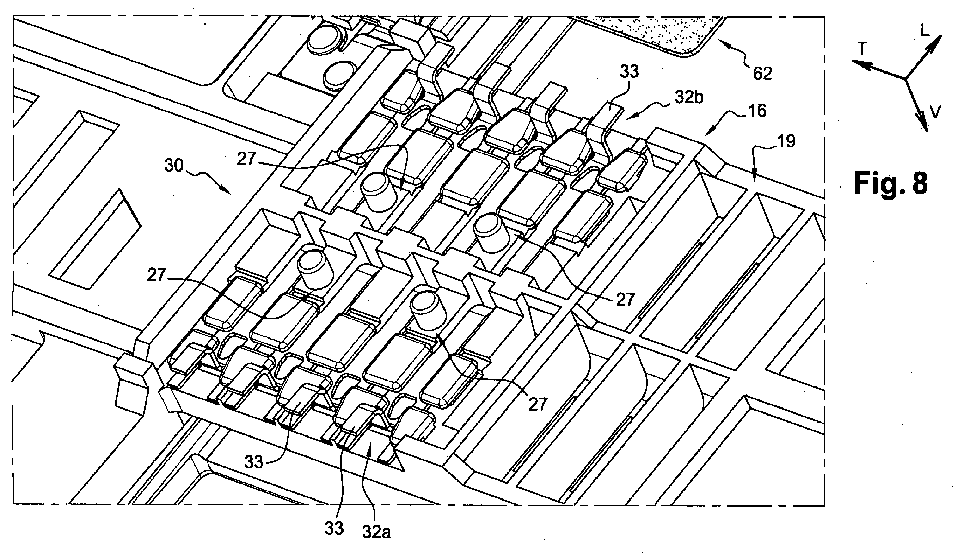

As can be seen in figure 8, the bottom plate 16 of the connector 10 forms, with its central part in the transverse direction "T", a blade-bearing insulating block 30 which here bears, in a known way, a front group of elastically deformable electrical contact blades 32a and a rear group of elastically deformable electrical contact blades 32b.

The overall design of the blade-bearing block 30 with its blades 32a, 32b is, for example, described and represented in detail in document US-A-6.447.338.

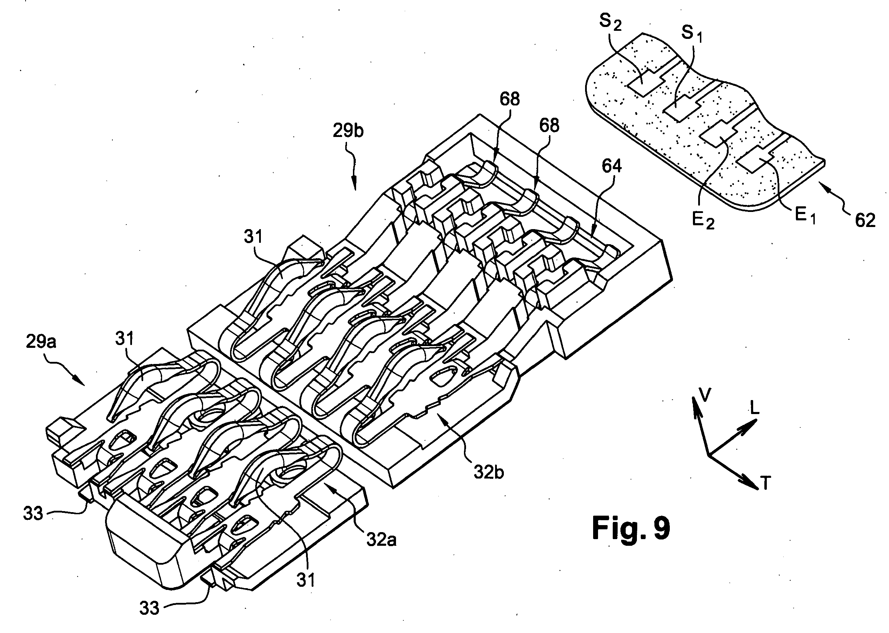

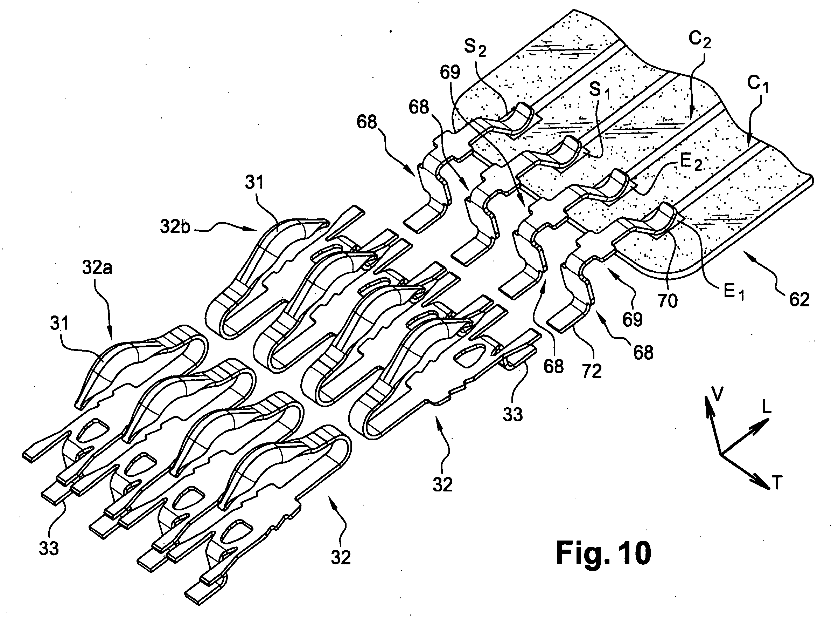

Each contact blade 32a, 32b, represented in detail in figures 9 and 10, is disposed parallel to a longitudinal horizontal direction and comprises a top portion 31 for electrical connection with a contact land of the chip card, which projects above the top face 20 of the horizontal bottom plate 16 of the connector 10.

Furthermore, each blade 32a, 32b comprises a bottom portion 33 for electrically connecting the contact blade 32a, 32b with a conductive track on the top face of the printed circuit board PCB which bears the connector 10, to be connected to the read/write device.

The front group of contact blades 32a is partly covered by a front cover 29a and the rear group of contact blades 32b is covered by a rear cover 29b, as illustrated in detail in figure 9.

Each cover 29a, 29b is overall interposed between the groups of blades 32a, 32b respectively and the printed circuit board PCB, and comprises four holes with opening out vertically, for the bottom connecting portions 33 of the contact blades 32a, 32b to pass through, such that said bottom connecting portions 33 are able to be connected to a conductive track on the top face of the printed circuit board PCB.

Each cover 29a, 29b comprises two holes in each of which is crimped a post 27 which extends vertically downwards from the bottom face 19 of the plate 16 of the connector 10, to fix the covers 29a, 29b to the plate 16.

As a nonlimiting example, at least one of the two covers 29a, 29b can, for example, bear a metal protective cage or a metal protective plate, as described in documents FR-A-2.875.036 or FR-A-2.875.037.

The invention seeks to preferentially protect all the contact blades 32a, 32b against a fraud attempt by intrusion, for example by creating an electrical contact with the contact blades 32a, 32b by means of a metal object, by drilling the connector 10.

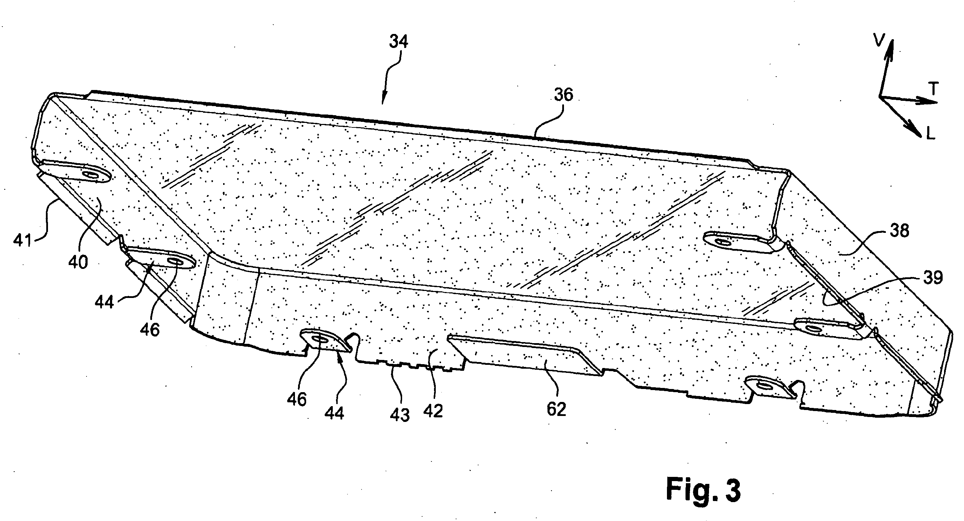

To this end, the arrangement comprises a protection element, which is here a protective cover 34 represented in detail in figure 3.

The cover 34, which is made of insulating material, in this case of plastic, overlaps the cover 14 in order to cover each plate 22, 24, 26, 28 of the cover 14, as illustrated in figures 1 and 2.

The cover 34 comprises a horizontal top wall 36, two vertical lateral walls 38, 40 and a vertical bottom wall 42.

In this embodiment, the cover 34 has three pairs of fixing tabs 44, represented in figure 3, each of which extends horizontally from a bottom edge 39, 41, 43 of each wall 38, 40, 42 vertical with respective to the cover 34, under the bottom plate 16 of the connector 10 and above the top face of the printed circuit board PCB.

Each tab 44 comprises a hole 46 which is passed through by a fixing post 48 associated with the bottom plate 16 of the connector 10, as shown in figure 1.

The posts 48 each extend vertically from the bottom face 19 of the bottom plate 16, and comprise a free end which is crushed and crimped on the associated tab 44, to ensure the fixing of the cover 34 to the connector 10.

Before being fixed to the connector 10, the cover 34 initially takes the form of a pressed part, which is, for example, obtained by swaging.

As a nonlimiting example, the initial form of the cover 34 can be obtained by moulding.

In this initial form, the walls 38, 40, 42 of the cover 34 and its fixing tabs 44 extend perpendicularly to the top wall 36.

The cover 34 is mounted on the connector 10 in this initial form, then the fixing tabs 44 of the cover 34 are bent back against the bottom plate 16 of the connector 10.

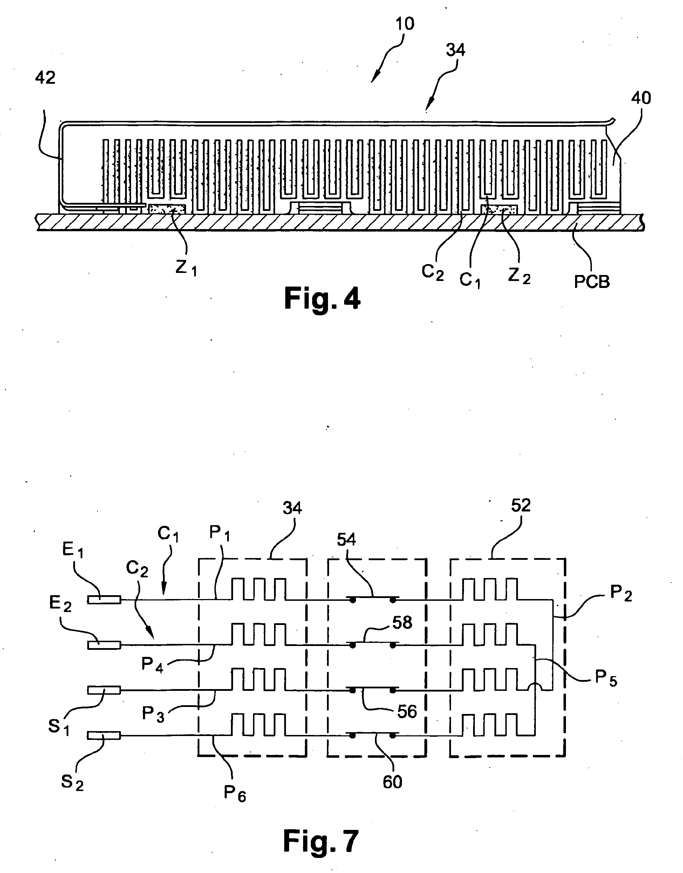

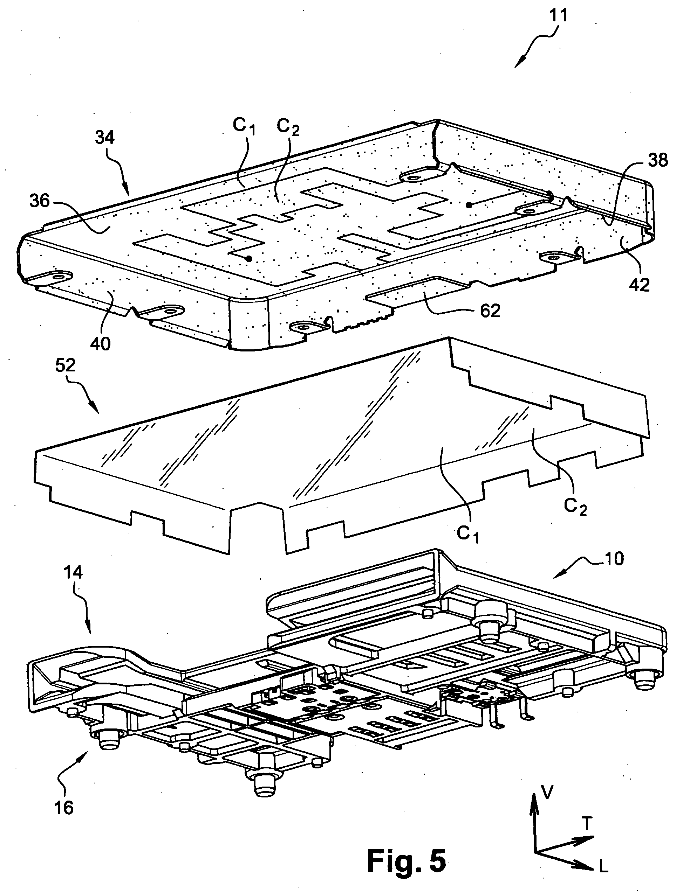

As can be seen in figures 4 and 5, the bottom face of the cover 34 comprises electrically conductive tracks which belong to protection circuits C1 and C2 and which snake without crossing.

More specifically, the tracks of the protection circuits C1 and C2 extend on the internal face of the horizontal wall 36, of the two vertical lateral walls 38, 40 and of the bottom wall 42 of the cover 34, so as to form a protection network.

The two lateral walls 38, 40 and the bottom wall 42 of the cover 34 here extend overall to the top face of the printed circuit board PCB.

Said protection circuits C1, C2 are, for example, printed using conductive ink, or chemically machined from a solid layer made of electrically conducting material.

As will be seen in more detail hereinafter in the description, the protection circuits C1, C2 are connected to a detection circuit which is borne by the top face of the printed circuit board PCB and which is able to emit a signal representative of a fraud attempt.

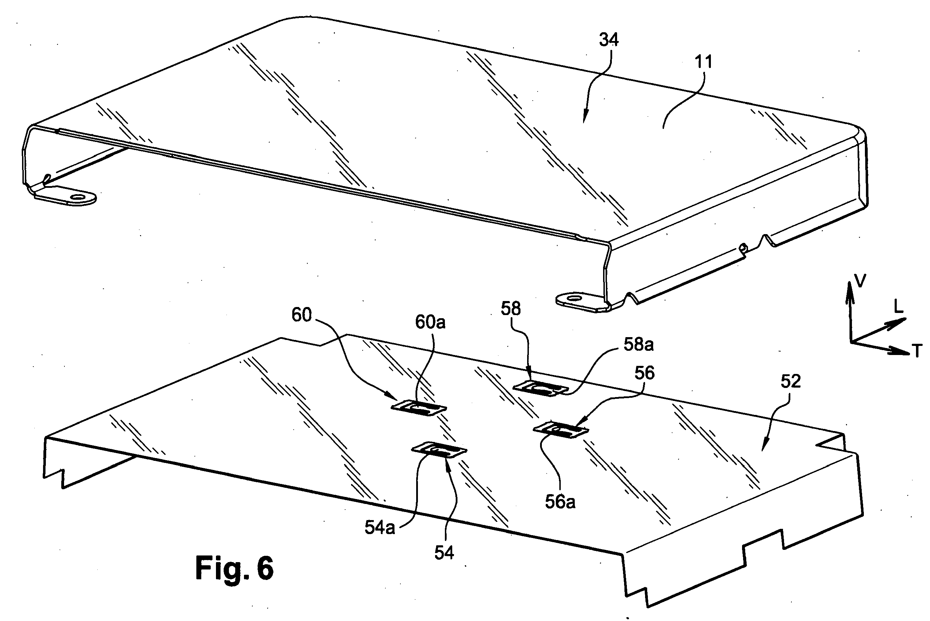

Furthermore, as can be seen in figures 5 and 6, the internal face of the cover 34 bears a protective film 52 made of insulating material, here made of plastic.

The internal face of the film 52 bears a set of tracks which snake and which are each produced using electrically conductive material, for example copper, and which belong to one of the protection circuits C1 or C2.

The protective film 52 is bonded to the internal face of the cover 34 for example by means of an adhesive tape or glue.

Thus, the cover 34 bears two protection circuits C1, C2, the tracks of which extend, overlaid, on the internal face of the cover 34 and on the internal face of the protective film 52, forming a protection network.

The diagram of figure 7 illustrates the arrangement of the various tracks of the protection circuits C1, C2.

The first protection circuit C1 comprises a first track P1 which snakes on the cover 34 from an input end E1, to a first electrically conductive bridge 54.

The first conductive bridge 54 is connected to a second track P2 of the protection circuit C1, which snakes on the film 52 to a second conductive bridge 56.

Finally, the second conductive bridge 56 is connected to a third track P3 of the protection circuit C1, which snakes in the cover 34 to an output end S1.

The second circuit C2 is produced in the same way, it comprises a fourth track P4 which snakes on the cover 34 from an input end E2, to a third electrically conductive bridge 58.

The third conductive bridge 58 is connected to a fifth track P5 of the protection circuit C2, which snakes on the film 52 to a fourth conductive bridge 60.

Finally, the fourth conductive bridge 60 is connected to a sixth track P6 of the protection circuit C2, which snakes on the cover 34 to an output end S2.

Advantageously, the designs of the circuits C1 and C2 are different and complementary, such that the circuits C1 and C2 form a dense network of conductive tracks.

As can be seen in figure 6, the bridges that provide the electrical continuity of the tracks each comprise a terminal 54a, 56a, 58a, 60a made of conductive material, for example copper.

Each terminal 54a, 56a, 58a, 60a of the bridge extends horizontally on the top face of the film 52 and comprises a first face which is in electrical contact with a track of the film 52 and a second opposing face which is in contact with a complementary track of the cover 34, such that, when the film 52 and the cover 34 are vertically offset from one another, the bridges no longer provide the electrical continuity and open at least one protection circuit C1, C2.

The cover 34 includes a tab 62, illustrated in figure 3, which here extends horizontally, from the bottom edge 43 of the bottom wall 42 of the cover 34.

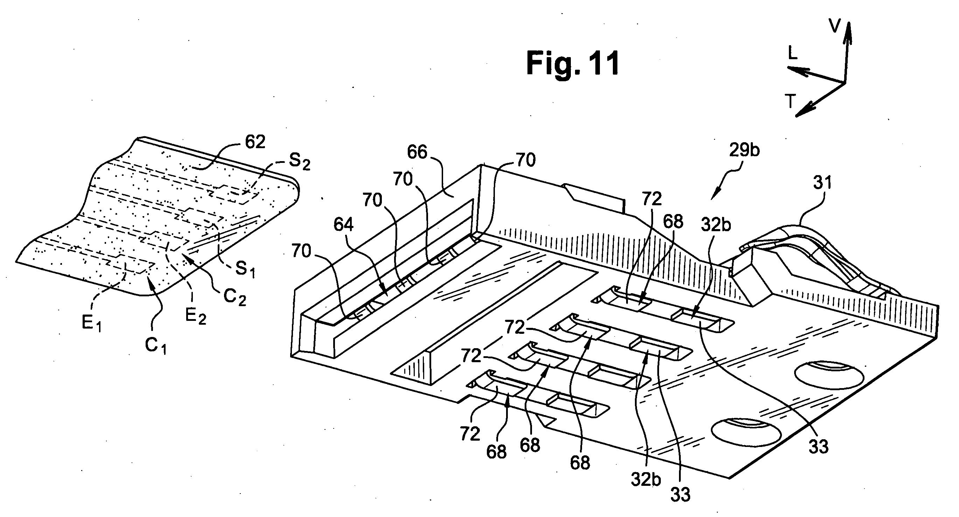

The tab 62 of the cover 34 is arranged in a slot 64, illustrated in figures 9 and 11, which extends overall horizontally in the thickness of the rear cover 29b of the contact blades 32b.

The slot 64 comprises a transverse opening which is arranged in a transverse rear edge 66 of said rear cover 29b and through which the tab 62 of the cover 34 is able to be inserted.

The tab 62 of the cover 34 bears, on its top face, the input ends E1, E2 and the output ends S1, S2 of each of the two protection circuits C1 and C2, in the manner of a connecting ribbon cable.

According to the invention, the bottom plate 16 of the connector 10 bears four additional contact blades 68 for connecting the input ends E1, E2 and output ends S1, S2 with an associated track linking to the detection circuit.

More specifically, said four additional contact blades 68 are here borne by the rear cover 29b, as can be seen in figures 9 and 11.

When the tab 62 of the cover 34 is arranged in the slot 64 of the rear cover 29b, each of the input ends E1, E2 and the output ends S1, S2 is electrically connected with the associated additional contact blades 68, as illustrated in figure 10.

Each additional contact blade 68, represented in detail in figure 10, extends overall in a longitudinal vertical plane and comprises, at a first end, a bottom portion 72 connecting with an associated track of the detection circuit.

The bottom connecting portion 72 of each additional contact blade 68 extends horizontally, in the same plane as the bottom connecting portions 33 of the contact blades 32a, 32b, so as to solder or braze each bottom connecting portion 33, 72 of the blades 32a, 32b, 68 to an associated track of the printed circuit board PCB in one and the same step.

Each additional contact blade 68 comprises, at a second end, a top portion 70 connecting with an input end E1, E2 or output end S1, S2 of the protection circuits C1 and C2.

Each top connecting portion 70 is here of concave form, incurved downwards, and projects in the slot 64 for insertion of the tab 62 of the cover 34, so as to be electrically connected to an associated input end E1, E2 or output end S1, S2.

To this end, each top connecting portion 70 is able to be elastically deformed, in particular on passing through the tab 62 of the cover 34.

Each additional contact blade 68 comprises a bent middle portion 69 which connects the top connecting portion 70 with the bottom connecting portion 72 of each additional contact blade 68.

Each middle portion 69 comprises a vertical strand and a horizontal strand, each strand comprising transverse projections, in order to ensure the fixing and the positioning of the blade 68, here in the rear cover 29b.

The four additional contact blades 68 are identical, and produced by bending, made of an electrically conductive material, for example copper or copper alloy.

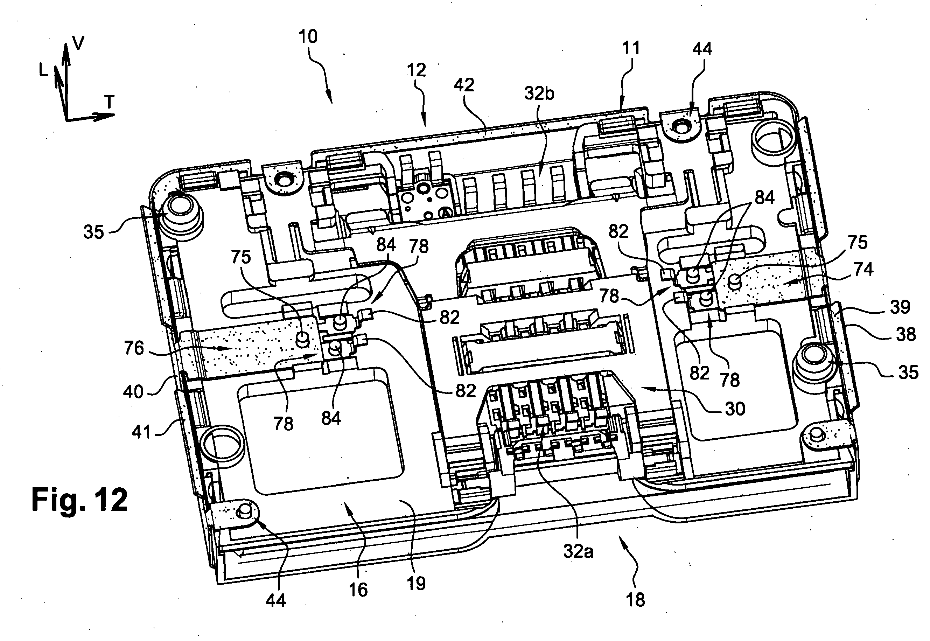

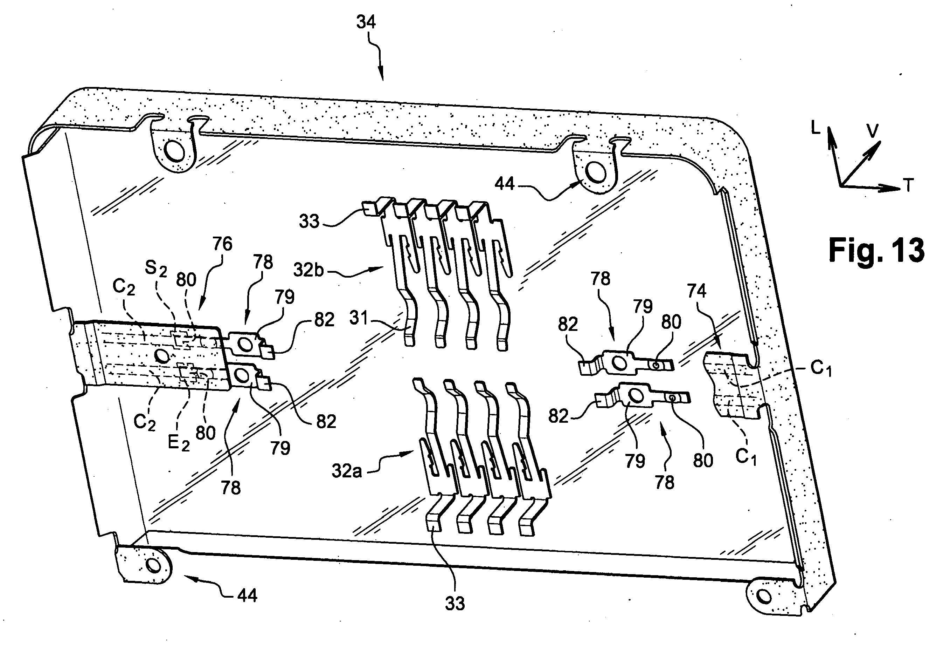

According to a second embodiment of the invention represented in figures 12 and 13, the cover 34 comprises a first tab 74 and a second tab 76 each of which extends horizontally and transversally from a bottom edge 39, 41 respective to the vertical walls 38, 40 of the cover 34 and facing the bottom face of the bottom plate 16 of the connector 10.

The first tab 74 bears, on its top face, the input end E1 and the output end S1 of the protection circuit C1 and the second tab 76 bears, on its top face, the input end E2 and the output end S2 of the protection circuit C2.

According to this second embodiment, the bottom plate 16 of the connector 10 bears four additional contact blades 78 which extend in opposing pairs in a transverse direction.

Each additional contact blade 78 comprises, at a first end, a bottom portion 82 for connecting with an associated track of the detection circuit.

The bottom connecting portion 82 of each additional contact blade 78 extends horizontally, in the same plane as the bottom connecting portions 33 of the contact blades 32a, 32b, so as to solder or braze each bottom connecting portion 33, 72 of the blades 32a, 32b, 78 to an associated track of the printed circuit board PCB in one and the same step.

Each additional contact blade 78 comprises a middle portion 79 which ensures the fixing and the positioning of the blade 78 on the bottom plate 16 of the connector 10.

To this end, each middle portion comprises a hole passed through by a post 84 which extends vertically downwards from the bottom face 19 of the bottom plate 16.

Advantageously, the free end of each post 84 is crushed and crimped with the associated additional contact blade 78, to ensure the fixing of the additional contact blades 78 on the connector 10.

Each additional contact blade 78 comprises, at a second end, a top portion 80 for connecting with an associated input end E1, E2 or output end S1, S2 of the protection circuits C1 and C2.

Each top connecting portion 80 is here of concave form, incurved downwards, so as to be electrically connected to the associated input end E1, E2 or output end S1, S2.

The four additional contact blades 78 are here identical, and produced by bending, made of an electrically conductive material, for example copper or copper alloy.

The tab 74 and the tab 76 each comprise a hole which is passed through by a post 75 which extends vertically from the bottom face 19 of the bottom plate 16 of the connector 10.

Advantageously, the free end of each post 75 is crushed and crimped on the associated tab 74, 76, so as to lock the tabs 74, 76 on the connector 10.

When a fraudster tries to drill the cover 14 to reach one of the contact blades 32a, 32b of the connector 10, for example using a metal drill, in a first scenario, he cuts at least one of the tracks of the circuit C1 and/or C2.

In this case, the current no longer circulates in the broken track and the detection circuit detects the discontinuity of the cut track and emits a signal representative of a fraud attempt. This detection mode has the advantage of being effective even if the device used to drill is not made of conductive material.

In a second scenario, the drill damages one or more tracks of the circuit C1 and/or C2 and reduces its section at the point of drilling.

It is known that the resistance of a wire, or of a track in this case, is inversely proportional to its cross-sectional area. In this case, the resistance of the damaged track is less than its initial resistance, which enables the detection circuit to detect a fraud by measuring the variation of the resistance of the damaged track or tracks.

In a third scenario, the fraudster drills a hole with a metal drill between two separate tracks of the circuit C1 and/or C2.

The two drilled tracks come into electrical contact via the metal drill, which enables the detection circuit to detect a short circuit between the two tracks and emit a signal representative of a fraud attempt.

In a fourth scenario, the fraudster tries to remove the cover 34 from the connector 10, which cannot be done without tearing at least one fixing tab 44 of the cover 34.

Now, the hole 46 of each fixing tab 44 which is passed through by a post 48 of the connector 10 is surrounded by at least one track of one of the two protection circuits C1, C2, therefore the detection circuit detects the discontinuity of the cut track and emits a signal representative of a fraud attempt.

In a fifth scenario, the fraudster tries to shunt a part of one of the two protection circuits C1 or C2, in order to be able to cut the shunted part unknown to the detection circuit.

However, the tracks of the protection circuits C1 and C2 cannot be discerned from one another, so the fraudster risks creating a short circuit which will be detected by the detection circuit.

In these five detection cases, any communication between the chip card and the read/write device is then prevented to avoid any fraud or any spoofing.

Furthermore, the tab 62 of the cover 34 which bears the input ends E1, E2 and the output ends S1, S2 of each of the two protection circuits C1 and C2 is ideally arranged under the connector 10.

In practice, the tab 62 is arranged inside the cover 34, such that access to the tab 62 of the cover 34 is very well protected.

The same goes for the tabs 74, 76 of the cover 34 according to the second embodiment of the invention.

According to a variant of embodiment of the invention represented in figure 4, the external face of the cover 34 bears an external electrically-conductive protection layer, which is here made of copper, and which is electrically connected to ground.

To this end, the external protection layer of each of the cover 34 comprises two soldering areas, which are electrically connected by soldering to ground via a track of the top face of the printed circuit board PCB.

As can be seen in figure 4, the portions of the bottom face which are facing the two soldering areas Z1, Z2, do not include conductive tracks of the protection circuits C1, C2, in order to avoid soldering said tracks to ground.

This variant of embodiment offers an additional protection level.

In practice, when a fraudster drills the cover 34, for example using a metal drill, at least one track of one of the protection circuits C1, C2 comes into electrical contact with ground via the external protection layer and via the metal drill, which enables the detection circuit to detect a short circuit between the two tracks and to emit a signal representative of a fraud attempt.

The invention is not limited to the embodiment described previously.

By way of variants not represented, the invention is applicable to all types of connector comprising a blade-bearing block 30, independently of the design of the card guidance means, the latter being able to be fitted in any orientation relative to the blade-bearing block 30.

Similarly, the variants of embodiment described previously can be combined.

Similarly, the tracks of the protection circuits C1 and C2 can be formed by deposition techniques like pad printing or screen printing using a conductive ink or paint.

The arrangement according to the invention makes it possible to produce an electrical connector for connecting a chip card which is fitted with an effective protection cover for detecting fraud attempts, notably through the arrangement of the additional contact tabs.

In practice, the additional contact tabs are arranged so as to be protected by said protection cover.

Furthermore, the assembly formed by a connector and a protection cover produced according to the teachings of the invention presents the advantage of forming a product which is able to operate after a simple operation connecting the product to the PCB.

## Claims

1. Security arrangement for an electrical connector (10) for connecting an electrical memory card witch contacts, the connector (10) comprising a horizontal bottom plate (16) made of insulating material which bears a series of blades (32a, 32b) for contacting the lands of the memory card, each contact blade (32a, 32b) being elastically deformable and arranged parallel to a longitudinal horizontal direction and comprising:
- a top portion (31) for connecting with a contact land of the memory card, which projects above the top face (20) of the horizontal bottom plate (16) of the connector (10) ;
- and a bottom portion (33) for connecting with a conductive track on one side of a bottom printed circuit board (PCB) which bears the connector (10);
the arrangement comprising a protection element (34) which bears at least one protection conductor circuit (C1) which at least partly surrounds the bottom plate (16) of the connector (10) and which is connected to at least one of the tracks on one side of the printed circuit board (PCB) to be linked to a detection circuit, **characterized in that** the bottom horizontal plate (16) of the connector (10) bears at least one additional contact blade (68) which comprises:
- a top portion (70) for connecting with the protection circuit (C1) of the protection element (34);
- and a bottom portion (72) for connecting with said at least one track linking to the detection circuit.

2. Arrangement according to the preceding claim, **characterized in that** said bottom connecting portion (72) of the additional contact blade (68) is of the same type as those of the blades (32a, 32b) for contact with the card.

3. Arrangement according to any one of the preceding claims, **characterized in that** said bottom connecting portions (72, 33) are coplanar horizontal, each to be soldered and/or brazed to an associated track on the face of the printed circuit board.

4. Arrangement according to any one of the preceding claims, **characterized in that** the protection element (34) comprises a tab (62) which bears at least one end (E1, S1) of the protection circuit (C1) and which extends through a slot (64) in the bottom plate (16) of the connector (10) and **in that** the top connecting portion (70) of the additional contact blade (68) is elastically deformable and projects into the slot so as to be electrically connected with said at least one end (E1, S1) of the protection circuit (C1) when the tab (62) is inserted into the slot (64).

5. Arrangement according to the preceding claim, **characterized in that** the top connecting portion (70) of the additional contact blade (68) is oriented downwards and said at least one end (E1, S1) of the protection circuit (C1) is borne by the top face of the tab (62).

6. Arrangement according to any one of the preceding claims, **characterized in that** the contact blades (32a, 32b) for the lands of the memory card are borne by a blade-bearing block (30) made of insulating material which is added into the bottom plate (16) of the connector (10) and **in that** the additional contact blade (68) is borne by a cover (29b) which is added onto the bottom plate (16) of the connector (10).

7. Arrangement according to any one of the preceding claims, **characterized in that** the protection element (34) is a cover (34) added above the connector (10) and **in that** the protection circuit (C1) is arranged inside the cover.

8. Arrangement according to the preceding claim, **characterized in that** the cover comprises at least one fixing tab (44) which extends under the bottom plate (16) of the connector (10) and above the top face of the printed circuit board, and which comprises a hole (46) which is passed through by a post (48) for fixing the bottom plate (16) of the connector (10), the hole (46) of the fixing tab (44) being surrounded by at least one track of the protection circuit (C1).

9. Arrangement according to any one of the preceding claims, **characterized in that** the protection element (34) is produced in the form of a flexible or semi-rigid sheet.

10. Arrangement according to any one of the preceding claims, **characterized in that** the protection element (34) bears a protecting film of insulating material on which snakes at least one track of the protection circuit (C1), and **in that** the electrical continuity of the tracks of the protection circuit (C1) borne by the film (52) and those borne by the protection element (34) is provided by means of at least one electrically conductive bridge (54, 56).

11. Arrangement according to the preceding claim, **characterized in that** the conductive bridge (54, 56) is electrically cut when the protection element (34) and the film (52) are vertically separated from each other.

12. Arrangement according to any one of the preceding claims, **characterized in that** the protection element (34) comprises several separate protection circuits (C1, C2) which are each arranged snake-wise to form a protection circuit.

## Patentansprüche

1. Sicherheitsanordnung für einen elektrischen Verbinder (10) zum Anschluss einer elektrischen Speicherkarte mit Kontakten, wobei der Verbinder (10) eine horizontale Bodenplatte (16) aufweist, die aus Isoliermaterial hergestellt ist, und an der sich eine Reihe von Kontaktmessern (32a, 32b) zum Kontaktieren der Kontaktflecken der Speicherkarte befindet, wobei jedes Kontaktmesser (32a, 32b) elastisch verformbar und parallel zu einer horizontalen Längsrichtung angeordnet ist, und folgendes besitzt:
einen oberen Teil (31) zum Anschluss an einen Kontaktflecken der Speicherkarte, der über die Oberseite (20) der horizontalen Bodenplatte (16) des Verbinders (10) herausragt;
und einen unteren Teil (33) zum Anschluss an eine Leiterbahn auf einer Seite einer unteren Leiterplatte, an der sich der Verbinder (10) befindet;
wobei die Anordnung ein Schutzelement (34) aufweist, das mindestens einen Verbinderschutzkreis (C1) besitzt, der die Bodenplatte (16) des Verbinders (10) zumindest teilweise umgibt, und der mit mindestens einer der Bahnen auf einer Seite der Leiterplatte verbunden ist, die mit einem Erfassungskreis zu verbinden ist, **dadurch gekennzeichnet, dass** die horizontale Bodenplatte (16) des Verbinders (10) mindestens ein weiteres Kontaktmesser (68) aufweist, das folgendes besitzt:
einen oberen Teil (70) zum Anschluss an einen Schutzkreis (C1) des Schutzelementes (34);
und einen unteren Teil (72) zum Anschluss an die mindestens eine Bahn mit Verbindung zu dem Erfassungskreis.

2. Anordnung nach dem vorhergehenden Anspruch, **dadurch gekennzeichnet, dass** es sich bei dem unteren Verbindungsteil (72) des zusätzlichen Kontaktmessers (68) um die gleiche Art wie die der Messer (32a, 32b) für den Kontakt mit der Karte handelt.

3. Anordnung nach einem der vorhergehenden Ansprüche, **dadurch gekennzeichnet, dass** die unteren Verbindungsteile (72, 33) koplanar und horizontal verlaufen, und jeweils an eine zugehörige Bahn auf der Oberfläche der Leiterplatte anzulöten sind.

4. Anordnung nach einem der vorhergehenden Ansprüche, **dadurch gekennzeichnet, dass** das Schutzelement (34) eine Lasche (62) aufweist, an der sich mindestens ein Ende (E1, S1) des Schutzkreises (C1) befindet, und das durch einen Schlitz (64) in der Bodenplatte (16) des Verbinders (10) verläuft, und dass der obere Verbindungsteil (70) des zusätzlichen Kontaktmessers (68) elastisch verformbar ist, und in den Schlitz hineinragt, so dass er mit mindestens einem Ende (E1, S1) des Schutzkreises (C1) elektrisch verbunden ist, wenn die Lasche (62) in den Schlitz (64) eingeschoben ist.

5. Anordnung nach dem vorhergehenden Anspruch, **dadurch gekennzeichnet, dass** der obere Verbindungsteil (70) des zusätzlichen Kontaktmessers (68) nach unten gerichtet ist, und das mindestens eine Ende (E1, S1) des Schutzkreises (C1) sich an der Oberseite der Lasche (62) befindet.

6. Anordnung nach einem der vorhergehenden Ansprüche, **dadurch gekennzeichnet, dass** sich die Kontaktmesser (32a, 32b) für die Kontaktflecken der Speicherkarte an einem messerhaltenden Block (30) befinden, der aus Isoliermaterial hergestellt ist, und sich zusätzlich an der Bodenplatte (16) des Verbinders (10) befindet, und dass sich das zusätzliche Kontaktmesser (68) an einer Abdeckung (29b) befindet, die sich zusätzlich an der Bodenplatte (16) des Verbinders (10) befindet.

7. Anordnung nach einem der vorhergehenden Ansprüche, **dadurch gekennzeichnet, dass** es sich bei dem Schutzelement (34) um eine Abdeckung (34) handelt, die über dem Verbinder (10) ergänzt wurde, und dass der Schutzkreis (C1) in der Abdeckung angeordnet ist.

8. Anordnung nach dem vorhergehenden Anspruch, **dadurch gekennzeichnet, dass** die Abdeckung mindestens eine Befestigungslasche (44) aufweist, die unter der Bodenplatte (16) des Verbinders (10) und über der Oberseite der Leiterplatte verläuft, und die ein Loch (46) aufweist, durch das eine Stange (48) zur Befestigung der Bodenplatte (16) des Verbinders (10) verläuft, wobei das Loch (46) der Befestigungslasche (44) von mindestens einer Bahn des Schutzkreises (C1) umgeben ist.

9. Anordnung nach einem der vorhergehenden Ansprüche, **dadurch gekennzeichnet, dass** das Schutzelement (34) in Form einer flexiblen oder halbstarren Platte hergestellt ist.

10. Anordnung nach einem der vorhergehenden Ansprüche, **dadurch gekennzeichnet, dass** das Schutzelement (34) einen Schutzfilm aus Isoliermaterial aufweist, auf dem sich mindestens eine Bahn des Schutzkreises (C1) entlang schlängelt, und dass der Stromdurchgang der Bahnen des Schutzkreises (C1), die einen Film (52) aufweisen, und jener mit einem Schutzelement (34), mittels mindestens einer elektrisch leitenden Brücke (54, 56) geliefert wird.

11. Anordnung nach dem vorhergehenden Anspruch, **dadurch gekennzeichnet, dass** die leitende Brücke elektrisch unterbrochen wird, wenn das Schutzelement (34) und der Film (52) vertikal voneinander getrennt sind.

12. Anordnung nach einem der vorhergehenden Ansprüche, **dadurch gekennzeichnet, dass** das Schutzelement (34) mehrere separate Schutzkreise (C1, C2) besitzt, die jeweils schlangenförmig angeordnet sind, und einen Schutzkreis bilden.

## Revendications

1. Agencement de sécurité pour un connecteur électrique (10) pour le raccordement d'une carte à mémoire électrique à contacts, le connecteur (10) comportant une plaque inférieure (16) horizontale en matériau isolant qui porte une série de lames de contact (32a, 32b) des plages de la carte à mémoire, chaque lame de contact (32a, 32b) étant déformable élastiquement et disposée parallèlement à une direction horizontale longitudinale et comportant :
- une portion supérieure de raccordement (31) avec une plage de contact de la carte à mémoire, qui fait saillie au dessus de la face supérieure (20) de la plaque inférieure (16) horizontale du connecteur (10) ;
- et une portion inférieure de raccordement (33) avec une piste conductrice d'une face d'une plaque inférieure à circuits imprimés (PCB) qui porte le connecteur (10) ;
l'agencement comportant un élément de protection (34) qui porte au moins un circuit conducteur de protection (C1) qui entoure au moins en partie la plaque inférieure (16) du connecteur (10) et qui est raccordé à au moins une des pistes d'une face de la plaque à circuits imprimés (PCB) pour être relié à un circuit de détection, **caractérisé en ce que** la plaque inférieure (16) horizontale du connecteur (10) porte au moins une lame supplémentaire de contact (68) qui comporte :
- une portion supérieure de raccordement (70) avec le circuit de protection (C1) de l'élément de protection (34) ;
- et une portion inférieure de raccordement (72) avec ladite au moins une piste de liaison au circuit de détection.

2. Agencement selon la revendication précédente, **caractérisé en ce que** ladite portion inférieure de raccordement (72) de la lame supplémentaire de contact (68) est du même type que celles des lames de contact (32a, 32b) avec la carte.

3. Agencement selon l'une quelconque des revendications précédentes, **caractérisé en ce que** lesdites portions inférieures de raccordement (72, 33) sont horizontales coplanaires pour être chacune soudées et/ou brasées à une piste associée sur la face de la plaque à circuits imprimés.

4. Agencement selon l'une quelconque des revendications précédentes, **caractérisé en ce que** l'élément de protection (34) comporte une patte (62) qui porte au moins une extrémité (E1, S1) du circuit de protection (C1) et qui s'étend à travers une fente (64) de la plaque inférieure (16) du connecteur (10) et **en ce que** la portion supérieure de raccordement (70) de la lame supplémentaire de contact (68) est déformable élastiquement et fait saillie dans la fente de manière à être raccordée électriquement avec ladite au moins une extrémité (E1, S1) du circuit de protection (C1) lorsque la patte (62) est insérée dans la fente (64).

5. Agencement selon la revendication précédente, **caractérisé en ce que** la portion supérieure de raccordement (70) de la lame supplémentaire de contact (68) est orientée vers le bas et ladite au moins une extrémité (E1, S1) du circuit de protection (C1) est portée par la face supérieure de la patte (62).

6. Agencement selon l'une quelconque des revendications précédentes, **caractérisé en ce que** les lames de contact (32a, 32b) des plages de la carte à mémoire sont portées par un bloc porte-lames (30) en matériau isolant qui est rapporté dans la plaque inférieure (16) du connecteur (10) et **en ce que** la lame supplémentaire de contact (68) est portée par un cache (29b) qui est rapporté sur la plaque inférieure (16) du connecteur (10).

7. Agencement selon l'une quelconque des revendications précédentes, **caractérisé en ce que** l'élément de protection (34) est un capot (34) rapporté au dessus du connecteur (10) et **en ce que** le circuit de protection (C1) est agencé à l'intérieur du capot.

8. Agencement selon la revendication précédente, **caractérisé en ce que** le capot comporte au moins une patte de fixation (44) qui s'étend sous la plaque inférieure (16) du connecteur (10) et au dessus de la face supérieure de la plaque à circuit imprimés, et qui comporte un trou (46) qui est traversé par un pied (48) de fixation de la plaque inférieure (16) du connecteur (10), le trou (46) de la patte de fixation (44) étant entouré par au moins une piste du circuit de protection (C1).

9. Agencement selon l'une quelconque des revendications précédentes, **caractérisé en ce que** l'élément de protection (34) est réalisé sous la forme d'une feuille souple ou semi rigide.

10. Agencement selon l'une quelconque des revendications précédentes, **caractérisé en ce que** l'élément de protection (34) porte un film de protection en matériau isolant sur lequel serpente au moins une piste du circuit de protection (C1), et **en ce que** la continuité électrique des pistes du circuits de protection (C1) portées par le film (52) et celles portées par l'élément de protection (34) est réalisée au moyen d'au moins un pont (54, 56) conducteur d'électricité.

11. Agencement selon la revendication précédente, **caractérisé en ce que** le pont (54, 56) conducteur est coupé électriquement lorsque l'élément de protection (34) et le film (52) sont écartées verticalement l'un par rapport à l'autre.

12. Agencement selon l'une quelconque des revendications précédentes, **caractérisé en ce que** l'élément de protection (34) comporte plusieurs circuits de protection (C1, C2) distincts qui sont chacun agencés en serpentin pour constituer un réseau de protection.
